# EUROPEAN PATENT APPLICATION

(11) **EP 4 610 013 A1**
(43) Date of publication of application: **03.09.2025**
(21) Application number: 24159821.8
(22) Date of filing: 27.02.2024
(51) Int. Cl.: B29C 31/08, B29C 70/38, B29C 70/54

(54) **A SHEET WINDING ASSEMBLY FOR MANUFACTURING A WIND TURBINE BLADE**

(71) Applicant: LM Wind Power A/S, 6000 Kolding (DK)
(72) Inventor: IRINEU, Clistian, 55592-000 Ipojuca-PE (BR)
(74) Representative: COPA Copenhagen Patents

(57) **Abstract**

The present invention relates to sheet winding assembly for loading a plurality of cut sheet parts onto one or more receiving bobbins, for subsequent layup of these sheet parts in a wind turbine blade mould. The sheet wind assembly comprises a first magazine (66) holding a plurality of supply bobbins (68), and a second magazine (74) holding one or more receiving bobbins (78). A cutting device (72) configured to cut the sheet of material unwound from one or more of the supply bobbins (68) to form cut sheet parts (76). A conveying assembly (80) is configured for successively conveying the cut sheet parts along a path extending from the first magazine (66) to the second magazine (74), and an edge engagement device (82) is configured to engage an edge (71) of the sheet or of the cut sheet part and to pull said edge towards the second magazine (74) such that an overlap (84) is provided between successive sheet parts.

## Description

### Field of the invention

The present invention relates to sheet winding assembly, to a moulding assembly comprising the sheet winding assembly for forming a shell of a wind turbine blade, and to a method of successively winding a plurality of sheet parts around a receiving bobbin using the sheet winding assembly.

### Background of the invention

Climate change has created an urgent need for sustainable energy, putting the spotlight on wind power as a cost-effective and clean energy source. Wind turbines typically comprise a tower, generator, gearbox, nacelle, and one or more rotor blades, which capture kinetic energy of wind using known airfoil principles. With increasing energy demand, modern wind turbines can have power ratings of above 10 MW and may have rotor blades that exceed 100 meters in length.

Wind turbine rotor blades are typically made from a fibre-reinforced polymer material, comprising a pressure side shell half and a suction side shell half, also called blade halves. The cross-sectional profile of a typical blade includes an airfoil for creating an air flow leading to a pressure difference between both sides. The resulting lift force generates torque for producing electricity.

Wind turbine blades are usually manufactured by forming two shell parts or shell halves from layers of fibre material and resin. The shell halves of wind turbine blades are typically formed in blade moulds. First, a blade gel coat or primer is applied to the mould. Subsequently, fibre reinforcement and/or fabrics are placed into the mould followed by resin infusion. A vacuum is typically used to draw epoxy resin material into a mould. Alternatively, prepreg technology can be used in which a fibre or fabric pre-impregnated with resin forms a homogenous material which can be introduced into the mould. Several other moulding techniques are known for manufacturing wind turbine blades, including compression moulding and resin transfer moulding. The shell halves are assembled by being glued or bolted together substantially along a chord plane of the blade.

In some known methods of blade moulding, the fibre layers or fabrics are provided to the mould as rolls comprising a long sheet of material which is arranged on the mould surface, and which is subsequently cut to fit the shape of the part to be manufactured, typically using a cutting station arranged close to the blade mould. However, arranging and cutting the layers of fibre material within the interior of a mould can be a time-consuming and labour intensive process.

Other known methods rely on a plurality of pre-shaped fibre mats which can be unwound or drawn from respective bobbins arranged close to the blade mould. However, for each pre-shaped fibre mat an individual bobbin is required, which needs to be transferred to the blade mould.

Other approaches use a single bobbin of material loaded with various pre-shaped fibre mats to be laid out within the blade mould. However, these techniques typically require tedious manual labour, involving pulling the source materials to the required length, cutting the source materials to the required length, and rolling the mats or layers onto a roll or bobbin. This process is time-consuming and expensive, and is also found to involve a considerable risk of mistakes in terms of individual mat lengths or with respect to the sequence of mats applied to the bobbin.

It is thus a first object of the present invention to provide an improved layup process for wind turbine blade manufacturing.

It is a further object of the present invention to provide an improved method and apparatus for manufacturing a bobbin loaded with a plurality of sheet parts for layup in a wind turbine blade mould.

It is a further object of the present invention to provide a method of manufacturing a wind turbine blade part which is quicker, more efficient and less prone to layup mistakes.

### Summary of the invention

The present inventors have found that one or more of said objects may be achieved by a sheet winding assembly comprising a first magazine holding a plurality of supply bobbins, each supply bobbin carrying a respective sheet of material wound around the bobbin, wherein each supply bobbin is rotatably arranged in the first magazine for unwinding its respective sheet of material, a cutting device configured to cut the sheet of material unwound from one or more of the supply bobbins to form cut sheet parts, a second magazine holding one or more receiving bobbins, each receiving bobbin being configured to receive one or more of the cut sheet parts, wherein each receiving bobbin is rotatably arranged in the second magazine for successively winding a plurality of the cut sheet parts around the respective receiving bobbin, a conveying assembly arranged in between the first magazine and the second magazine, the conveying assembly being configured for successively conveying the cut sheet parts along a path extending from the first magazine to the second magazine, and an edge engagement device arranged in between the first magazine and the second magazine configured to engage an edge of the sheet or of the cut sheet part and to pull said edge towards the second magazine, preferably such that an overlap is provided between successive cut sheet parts.

It is found that this assembly significantly reduces the cycle time for producing bobbins loaded with different sheets of fibre material for the subsequent layup in a blade manufacturing process. In addition, the arrangement of the present invention is found to provide a safer solution as compared to known devices, as no manual intervention is required during the winding operation, such as lifting or changing heavy rolls of source material. Also, the assembly of the present invention can be conveniently set up to efficiently produce a wide range of bobbins loaded with sheet parts of various predetermined sequences and sheet overlaps.

In particular, for a given bobbin comprising a plurality of sheet parts in a desired sequence for subsequent layup in a blade mould, the degree of required overlap between the different sheet parts may vary between sheet parts of different sizes and materials. Thus, it is found that such varying degrees of overlap can be efficiently obtained using the assembly of the present invention which comprises an edge engagement device configured to engage an edge of the sheet or of the cut sheet part and to pull said edge towards the second magazine such that the desired overlap is provided for the respective set of sheet parts. This results in a quicker and more efficient production process for the bobbins carrying the multiple sheet parts for the production of a wind turbine blade.

The sheet winding assembly may comprise a housing, e.g. a housing comprising a bottom wall and two opposing side walls. Furthermore, one or more cross bars can extend between the two opposing side walls of the housing. The housing may be open at its uppers side and at its front and rear end. In some embodiments, several or all components of the sheet winding assembly are arranged in or on the housing of the sheet winding assembly. It is thus preferred that the sheet winding assembly is a sheet winding apparatus. The housing may generally take the form of an upwardly open box, which is also open at its front and rear face.

The first magazine of the sheet winding assembly holds a plurality of supply bobbins, such as at least two supply bobbins, preferably at least three supply bobbins, such as 3-5 supply bobbins. As used herein the term "bobbin" means any core, roll or other member on which sheet(s) or sheet parts may be wound so that the sheet(s) or sheet parts may be moved from place to place.

In a preferred embodiment, the first magazine is a revolving magazine, preferably revolving about a substantially horizontal axis. In a preferred embodiment, the first magazine is a cylindrical magazine. The revolving first magazine is preferably rotatable independently from the rotation of each of the supply bobbins.

In a preferred embodiment, the supply bobbins are arranged radially about the central longitudinal axis of the first magazine, which in the case of a cylindrical magazine coincides with the central cylinder axis of the first magazine. In a preferred embodiment, the bobbins are arranged radially about the central longitudinal axis of the magazine at regular intervals, e.g., in a circle wherein three bobbins are spaced at angles of 120 degrees apart, four bobbins are spaced at angles of 90 degrees, and so on.

The first magazine is preferably fixed on a shaft which revolves in respective bearings which can be arranged in or on the housing. Thus, by rotating the first magazine, each of the positions of the respective supply bobbins can advantageously be varied within the assembly, such that a targeted supply bobbin is placed closest to the conveying assembly for unwinding a sheet from that supply bobbin.

Similarly, each of the plurality of supply bobbins is preferably supported on a respective shaft rotatably mounted within the first magazine, such that the shaft may drive the respective supply bobbin to rotate within the first magazine. Each respective shaft may be rotatably arranged in shaft bearings arranged in or on the magazine. The shaft is preferably placed inside the bobbin such that its position is centered, with the two opposing ends of the shaft extending beyond the bobbin.

Preferably, each supply bobbin carries a respective sheet of material wound around the bobbin. The respective supply bobbins may, for example, carry different types of sheets of material, i.e., a first supply bobbins carrying a first type of sheet, a second supply bobbin carrying a second type of sheet, and so on. In a preferred embodiment, the sheet and the sheet part is a fibre mat, i.e., a fabric comprising fibres. As used herein the term "fabric" means a material comprising a network of fibres including, but not limited to, woven or knitted materials, tufted or tufted-like materials, nonwoven webs.

Thus, it is preferred that one or more of the sheets, such as all of the sheets, comprise a fibre material, such as a glass fibre material and/or a carbon fibre material. Preferably, one or more of the sheets, such as all of the sheets, comprise a fibre fabric. The sheets may include one or more uniaxial fibre mats and one or more biaxial fibre mats. The sheets wound on the supply bobbins may have a generally rectangular shape with a length of at least 10 meters, such as at least 25 meters, or at least 50 meters. The thickness of the sheet may be between 1 and 20 mm. The width of the sheet may be between 1 and 5 meters.

Each supply bobbin is rotatably arranged in the first magazine for unwinding its respective sheet of material. This can be achieved, for example, by rotating a shaft carrying the respective supply bobbin to unwind the sheet from the supply bobbin. In some embodiments, the sheet is unwound from the supply bobbin until it makes contact with the conveying assembly, typically with a conveyor belt.

The conveying assembly is arranged in between the first magazine and the second magazine, wherein the conveying assembly is configured for conveying the sheet and the cut sheet parts along a transport path extending from the first magazine to the second magazine. Thus, for example, if the sheet is unwound from the supply bobbin until it makes contact with the conveying assembly, the latter can be used to transport the sheet along said path while further unwinding the sheet from its supply bobbin.

Thus, it is preferred that at least part of the conveying assembly is located underneath at least part of the first magazine. Likewise, it is preferred that at least part of the conveying assembly is located underneath at least part of the second magazine. Preferably, the conveying assembly has a first end and a second end, wherein the first end is closer to the first magazine, and wherein the second end is closer to the second magazine. In a preferred embodiment said first end is located underneath the first magazine, and the second end is located underneath the second magazine.

Typically, the conveying assembly comprises at least one conveyor belt, preferably a first conveyor belt and a second conveyor belt. In some embodiments, a gap can be provided between the first conveyor belt and the second conveyor belt. Preferably, the first conveyor belt is located adjacent to the second conveyor belt as seen in the direction along the aforementioned path.

In some embodiments, the conveying assembly comprises conveyor rollers. In a preferred embodiment, the at least one conveyor belt is driven by a drive unit, preferably including a drive motor. Thus, a first conveyor belt can be driven by a first drive unit, preferably including a drive motor, and a second conveyor belt can be driven by a second drive unit, preferably including a drive motor. In a preferred embodiment, the conveying assembly comprises one or more traction conveyors. Typically, the conveying assembly will comprise drive means adapted to drive the conveyor belt in a conveying direction, wherein the drive means comprise one or more drive pulleys or drive wheels.

The sheet winding assembly also comprises a cutting device configured to cut the sheet of material unwound from one or more of the supply bobbins to form cut sheet parts. The cutting device may comprise one or more knives or one more lasers. In some embodiments, the cutting device comprises a knife cutting head, preferably equipped with multiple cutting tools such as one or more knives, notch tools, and/or drill punches.

In some embodiments, the cutting device can be attached, e.g. via a carriage, to a crossbar or similar transverse support structure extending over the aforementioned path between the first and second magazines. Said crossbar or transverse support structure may extend between opposed side walls of the housing of the sheet winding assembly. In some embodiments, the carriage is arranged to move along the crossbar along the width of the sheet. The cutting device is preferably communicatively connected to a control unit for controlling the cutting operation. The cutting device may also comprise one or more components for pressing the sheet down, such as a vacuum system, in order to enhance the cutting accuracy during the cutting process.

The cutting device is configured to cut the sheet of material along a direction substantially perpendicular to the transport direction of the sheet parts, i.e., substantially perpendicular to the aforementioned path extending from the first magazine to the second magazine. In other words, the cutting device is preferably configured to cut the sheet along its width direction. In some embodiments, the conveying assembly comprises a first conveyor belt and a second conveyor belt, wherein the cutting device is located in between said conveyor belts.

A second magazine is provided for holding one or more receiving bobbins. In a preferred embodiment, the second magazine is a revolving magazine, preferably revolving about a substantially horizontal axis. According to a particularly preferred embodiment, the second magazine is a cylindrical magazine. The revolving second magazine is preferably rotatable independently from the rotation of each of the receiving bobbins. Thus, by rotating the second magazine each of the positions of the respective receiving bobbins can advantageously be changed within the assembly, such that a desired receiving bobbin is placed closest to the conveying assembly for winding one or more sheet parts onto said receiving bobbin.

In a preferred embodiment, the first magazine is arranged at an upstream end of the sheet winding assembly, wherein the second magazine is arranged at a downstream end of the sheet winding assembly,

Preferably, the second magazine holds a plurality of receiving bobbins each being configured to receive one or more of the cut sheet parts, such as at least two receiving bobbins, preferably at least three receiving bobbins, such as 3-5 receiving bobbins. In a preferred embodiment, the receiving bobbins are arranged radially about the central longitudinal axis of the second magazine, which in the case of a cylindrical magazine coincides with the central cylinder axis of the second magazine. In a preferred embodiment, the bobbins are arranged radially about the central longitudinal axis of the magazine at regular intervals, e.g., in an annular shape or in a circle, wherein, for example, three bobbins are spaced at angles of 120 degrees apart, four bobbins are spaced at angles of 90 degrees, and so on. The second magazine is preferably fixed on a shaft which revolves in respective bearings which can be arranged in or on the housing.

Each receiving bobbin is rotatably arranged in the second magazine for successively winding a plurality of the cut sheet parts around the respective receiving bobbin. In a preferred embodiment, each of the receiving bobbins is supported on a respective shaft rotatably mounted within the second magazine, such that the shaft may drive the respective receiving bobbin to rotate within the second magazine. Each respective shaft may be rotatably arranged in shaft bearings arranged in or on the magazine. The shaft is preferably placed inside the bobbin such that its position is centered, with the two opposing ends of the shaft extending beyond the bobbin.

An edge engagement device is arranged in between the first magazine and the second magazine, wherein the edge engagement device is configured to engage an edge of the sheet or of the cut sheet part and to pull said edge towards the second magazine, typically along the aforementioned path, such that an overlap is provided between successive cut sheet parts. The overlap preferably comprises that one sheet part partly covers another sheet part. Thus, the edge engagement device advantageously comprises engagement means, such as a gripping device or a clamping device, for releasably engaging an edge of the sheet (part). Once the desired overlap between neighbouring or successive sheet parts is achieved, the edge engagement device can release the sheet (part).

The overlap is typically created by pulling one sheet (part) over the preceding sheet part, such that in the area of overlap two sheet parts are placed on top of each other. In a preferred embodiment, the extent of the overlap is between 200 to 2000 mm, preferably between 500 and 1000 mm, as measured in a direction perpendicular to the edge of the sheet parts, or as measured in the direction of perpendicular to the aforementioned path.

In a particularly preferred embodiment, the edge engagement device is configured to provide a variation in overlap between different successive or neighbouring sheet parts, for example, with a first overlap between a first and a second sheet part, and a second overlap, different from the first overlap, between the second and a third sheet part, and so on. The extent of overlap can be varied in particular according to a dimension and/or to a material of the respective sheets. Thus, the extent of overlap can be varied according to a length of the sheet parts and/or according to a width of the sheet parts. Preferably, the extent of overlap decreases with decreasing length of the sheet parts.

In some embodiments, the edge engagement device can be attached, e.g. via a carriage or a holder, to a crossbar or similar transverse support structure extending over the aforementioned path between the first and second magazines. Said crossbar or transverse support structure may extend between opposed side walls of the housing of the sheet winding assembly. In some embodiments, said crossbar or transverse support structure is movably arranged in the assembly, preferably to allow upstream and downstream movement of the edge engagement device, i.e., movement along and against said transport path.

In a preferred embodiment, the sheet winding assembly comprises two opposing rails, which optionally can be fixed to the respective opposing sidewalls of the housing, extending parallel to the conveying assembly, wherein the edge engagement device is slidingly received in between the two opposing rails, e.g., supported by a carriage or a crossbar. The general orientation or longitudinal axis of the edge engagement device is substantially perpendicular to the transport direction or the afore-mentioned path. The edge engagement device is preferably communicatively connected to a control unit for controlling the operation of the edge engagement device.

In a preferred embodiment, the edge engagement device comprises a clamping device adapted for clamping an edge of the sheet or of the cut sheet part, such as a vacuum clamp, or an electrostatic, magnetic or electromagnetic device. In a particularly preferred embodiment, the edge engagement device comprises a gripping device adapted for gripping an edge of the sheet (part), such as a needle gripper or a robot arm.

Usually, said edge of the sheet (part) to be engaged by the edge engagement device is a peripheral edge of the sheet (part) that extends in its width direction. Typically, said edge is oriented transversely or substantially perpendicular to the transport path. As used herein, said edge of the sheet (part) to be engaged by the edge engagement device includes an edge region of the sheet (part) which refers to the area between the edge of the sheet (part) and its bulk region along a distance of up to 100 mm, preferably up to 50 mm, as measured in a direction perpendicular to said edge, i.e., perpendicular to the width direction of the sheet (part).

In a preferred embodiment, the edge engagement device is adapted to move between a first location upstream of the cutting device to a second location downstream of the cutting device. Thus, the edge engagement device is preferably adapted to pass above or underneath the cutting device. Typically, the cutting device will be stationary, i.e., it will not be configured to above upstream or downstream along the transport path.

It is particularly preferred that the edge engagement device is configured to move in an upstream direction and in a downstream direction, along the aforementioned path, independently from the conveying assembly, such as independently from the movement of the conveyor belts. In other words, it is preferred that the edge engagement device is configured to move in an upstream direction and in a downstream direction, along the aforementioned path, independent of the speed or direction of the conveying assembly, e.g., of the first and second conveyor belts. Thus, the edge engagement device can pull the sheet (part) along the path in a downstream direction, even if the conveyor belt(s) stands still.

In a preferred embodiment, the sheet winding assembly comprises a driving system comprising one or more actuators, such as one or more motors, each optionally coupled with a transmission mechanism, such as a gearbox, and respective shafts for supporting each of the supply bobbins and receiving bobbins in their respective magazine, for imparting a rotational movement to each of the supply bobbins and receiving bobbins.

In a preferred embodiment, the sheet winding assembly comprises a control unit for controlling the one or more actuators, wherein the control unit is configured to independently adapt the speed of the rotational movement of each of the supply bobbins and receiving bobbins.

In a preferred embodiment, the sheet winding assembly comprises a measuring device for measuring the radius of each of the supply bobbins and the receiving bobbins, wherein the measuring device is configured to measure the radius of each of the supply bobbins and the receiving bobbins and to transmit this data to the control unit.

In a preferred embodiment, the sheet winding assembly comprises programmable logic for determining and monitoring a sequence of winding of sheet parts onto the receiving bobbins, and/or for determining and monitoring an overlap created between neighbouring sheet parts. Said programmable logic may be part of a control unit which controls the rotation of the magazines, the rotation of the bobbins, the cutting operation of the cutting device, and the movement and edge engagement of the edge engagement device.

In a preferred embodiment, the winding assembly further comprises a paper bobbin arranged in between the first magazine and the second magazine, the paper bobbin comprising a rolled up paper material. In a preferred embodiment, the paper material is kraft paper. This paper bobbin could carry a plurality of pre-cut paper sheets, which can be used to provide an initial, a final or one or more intermediate layers onto the receiving bobbins.

In another aspect, the present invention relates to a moulding assembly comprising a mould for forming a shell of a wind turbine blade, a gantry or a crane, a rail suspended from the gantry or crane above the mould, and a sheet winding assembly according to the present invention, wherein the sheet winding assembly is movably arranged in or on the rail. In a preferred embodiment, the rail is a monorail. Thus, if the sheet winding assembly, for example, has a housing with an open front and/or rear end, the sheet parts can be advantageously unwound from the receiving bobbins of the sheet winding assembly, when the second magazine is arranged at said open front or rear end.

In another aspect, the present invention relates to a method of successively winding a plurality of sheet parts around a receiving bobbin using the sheet winding assembly of the present invention, the method comprising the steps of unwinding a sheet of material from one of the plurality of supply bobbins of the first magazine, transporting said sheet along part of a transport path extending from the first magazine to the second magazine using the conveying assembly, cutting the sheet of material with the cutting device to form a cut sheet part, transporting the cut sheet part along another part of the transport path towards the second magazine using the conveying assembly, winding the cut sheet part around one of the receiving bobbins of the second magazine, wherein the aforementioned steps are repeated a plurality of times, wherein, preferably prior to, or after, the cutting step, an edge of one or more of the sheets or of the cut sheet parts is engaged by the edge engagement device and pulled in the direction of the second magazine such that an overlap is provided between successive sheet parts. The latter step is preferably carried out for each sheet part. In preferred embodiment, the overlap is between 200 to 2000 mm, preferably between 500 and 1000 mm, as measured in a direction perpendicular to the edge of the sheet parts.

The step of unwinding a sheet of material from one of the plurality of supply bobbins of the first magazine preferably comprises rotating the first magazine to place a desired supply bobbin closest to the conveying assembly for unwinding a sheet from that supply bobbin. In a preferred embodiment, the unwinding step also comprises unwinding the sheet from the supply bobbin by rotating a shaft onto which the supply bobbin is mounted within the first magazine. This can be done by using a drive unit, preferably with a motor, connected to the shaft, and is preferably controlled by the control unit.

The step of transporting said sheet along part of a transport path extending from the first magazine to the second magazine using the conveying assembly preferably comprises contacting the conveying assembly with an end of said sheet, and transporting the sheet along said path while further unwinding the sheet from its supply bobbin. Thus, it is preferred that at least part of the conveying assembly is located underneath at least part of the first magazine. Typically, the conveying assembly comprises at least one conveyor belt, preferably a first conveyor belt and a second conveyor belt.

The step of cutting the sheet of material with the cutting device to form a cut sheet part preferably comprises operating the cutting device through the control unit, wherein the cutting device is communicatively connected to the control unit. In a preferred embodiment the cutting step comprises cutting the sheet of material along a direction substantially perpendicular to the transport direction of the sheet parts, i.e., substantially perpendicular to the aforementioned path extending from the first magazine to the second magazine. In other words, the sheet is preferably cut along its width direction. In some embodiments, the conveying assembly comprises a first conveyor belt and a second conveyor belt, wherein the cutting device is located in between said conveyor belts.

The step of transporting the cut sheet part along another part of the transport path towards the second magazine using the conveying assembly preferably comprises transporting said cut sheet part on at least one conveyor belt, preferably the second conveyor belt of the conveying assembly.

The step of winding the cut sheet part around one of the receiving bobbins of the second magazine preferably comprises placing the receiving bobbin above the conveying system, preferably above the second conveyor belt, by rotating the second magazine. Then said receiving bobbin can be rotated to wind the cut sheet part(s) onto the bobbin. In some embodiments, an engagement member, such as a bar or an arm, can be provided to push the sheet part(s) from the end of the conveying assembly towards the receiving bobbin to facilitate the winding step.

The step of engaging an edge of the sheet (part) by the edge engagement device and pulling it in the direction of the second magazine such that an overlap is provided between successive sheet parts preferably comprises engaging the edge of the sheet (part) by the edge engagement device, pulling the sheet (part) towards the second magazine to create said overlap, and releasing said edge from the edge engagement device. Also, this step preferably comprises, moving the edge engagement device between a first location upstream of the cutting device to a second location downstream of the cutting device, wherein the edge of the sheet (part) is engaged at said second location. In a preferred embodiment, during this step, the edge engagement device passes above or underneath the cutting device.

In a particularly preferred embodiment, the step of engaging an edge of the sheet (part) by the edge engagement device and pulling it in the direction of the second magazine such that an overlap is provided between successive sheet parts is carried out for each sheet part. It is particularly preferred that the extent of overlap is varied between different successive or neighbouring sheet parts, for example, with a first overlap between a first and a second sheet part, and a second overlap, different from the first overlap, between the second and a third sheet part, and so on. The extent of overlap can be varied in particular according to a dimension and/or to a material of the respective sheets. Thus, the extent of overlap created by the edge engagement device can be varied according to a length of the sheet parts and/or according to a width of the sheet parts.

For example, for two neighbouring sheet parts, each having a length of 10 m, an overlap between these sheets of 1 m can be created, as measured in a direction perpendicular to the edge of the sheet parts or perpendicular to their width direction. By contrast, for two neighbouring sheet parts, each having a length of 1 m, an overlap between these sheets of 300 mm can be created, as measured in a direction perpendicular to the edge of the sheet parts or perpendicular to their width direction.

It is particularly preferred that the method is an automatic method. Preferably, the control unit of the sheet winding assembly controls each of the aforementioned steps, including the rotation of the magazines, the rotation of the bobbins, the cutting operation of the cutting device, and the movement and edge engagement of the edge engagement device, preferably via respective drive units.

In another aspect, the present invention relates to a method of manufacturing a wind turbine blade part, the method comprising providing a plurality of sheet parts for layup in a blade mould, wherein the sheet parts are subsequently successively unrolled from a receiving bobbin loaded using the sheet winding assembly of the present invention, wherein the sheet parts are arranged within a blade mould in the order that they are unwound from the bobbin, preferably followed by resin infusion and curing to obtain a blade part, such as a half shell.

A blade mould is provided defining an outer shape of the rotor blade or a portion thereof, such as an outer aerodynamic shape of a blade shell half. The sheet parts can be arranged within the blade mould, preferably to form part of the shell of the wind turbine blade. A suitable resin can then be infused into the one or more stacks of interconnected plies within the blade mould. Resin can be infused into the blade mould cavity to impregnate the sheet parts and potentially other material, such as spar caps, sandwich material, additional fibre material, etc, followed by curing and hardening the resin in order to form the blade part, such as the blade shell half.

The resin for injecting the sheet parts during the manufacturing of wind turbine blade parts may be an epoxy, a polyester, a vinyl ester or another suitable thermoplastic or duroplastic material. In other embodiments, the resin may be a thermosetting resin, such as epoxy, vinyl ester or polyester, or a thermoplastic resin, such as nylon, PVC, ABS, polypropylene or polyethylene.

Thus, the method preferably comprises unwinding the plurality of sheet parts successively from the receiving bobbin in a predefined order, and arranging the sheet parts within the blade mould in the order in which they are unwound, preferably followed by resin infusion and curing to obtain a blade part, such as a half shell. In some embodiments, a single receiving bobbin with multiple individually cut sheet parts, preferably comprising fibre material, is used per shell half. In other embodiments, several bobbins, such as at least two, at least three or at least four bobbins, are used per shell half, each bobbin comprising multiple individually cut sheet parts. The sheet parts can then be successively pulled from the receiving bobbin, wherein, for example, an operator inside the mould can pull the sheet parts from the bobbin.

In another aspect, the present invention relates to a wind turbine blade or a wind turbine blade part obtainable by the method of manufacturing a wind turbine blade part of the present invention, and to a wind turbine blade comprising a wind turbine blade part obtainable by said method.

All features and embodiments described above with respect to the sheet winding assembly likewise apply to the moulding assembly, to the method of successively winding a plurality of sheet parts around a receiving bobbin using the sheet winding assembly, and to the method of manufacturing a wind turbine blade part, and vice versa.

As used herein, the term "longitudinal" means an axis or direction running substantially parallel to the maximum linear dimension of the element in question.

The term "downstream direction" is used herein to refer to a transport direction or path of the conveying assembly from the first magazine to the second magazine. The term "upstream direction" is used herein to refer to a direction against the transport direction or path.

### Detailed description of the invention

The invention is explained in detail below with reference to embodiments shown in the drawings, in which
Fig. 1 shows a wind turbine,
Fig. 2 shows a schematic view of a wind turbine blade,
Fig. 3 shows a schematic view of an airfoil profile through section I-I of Fig. 4,
Fig. 4 shows a schematic view of the wind turbine blade, seen from above and from the side,
Fig. 5 is a schematic view of a method of rolling a plurality sheet parts onto a bobbin in a predefined order,
Fig. 6 is a schematic view of the resulting bobbin with the plurality of sheet parts in the predefined order,
Fig. 7 is a schematic top view of a blade mould into which the plurality of sheet parts are laid,
Fig. 8 is a perspective view of a sheet winding assembly according to the present invention,
Figs. 9-13 are schematic top view of a sheet winding assembly according to the present invention, illustrating a method of successively winding a plurality of sheet parts around a receiving bobbin using the sheet winding assembly,
Fig. 14 is a schematic view of a sheet winding assembly with a control unit, and
Fig. 15 is a schematic view of a moulding assembly according to the present invention.

### Detailed description

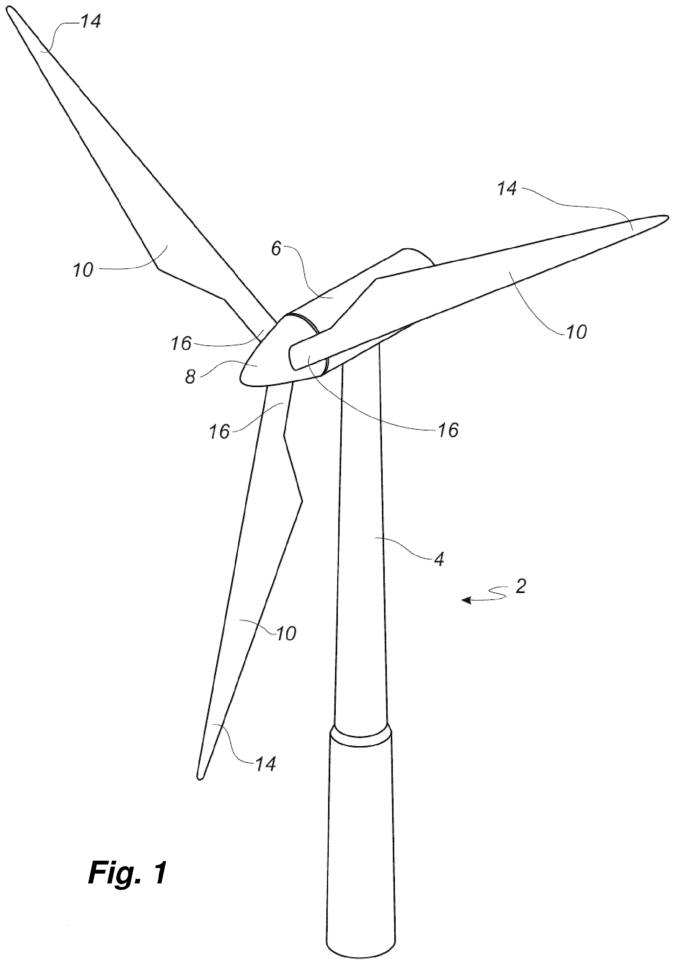

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

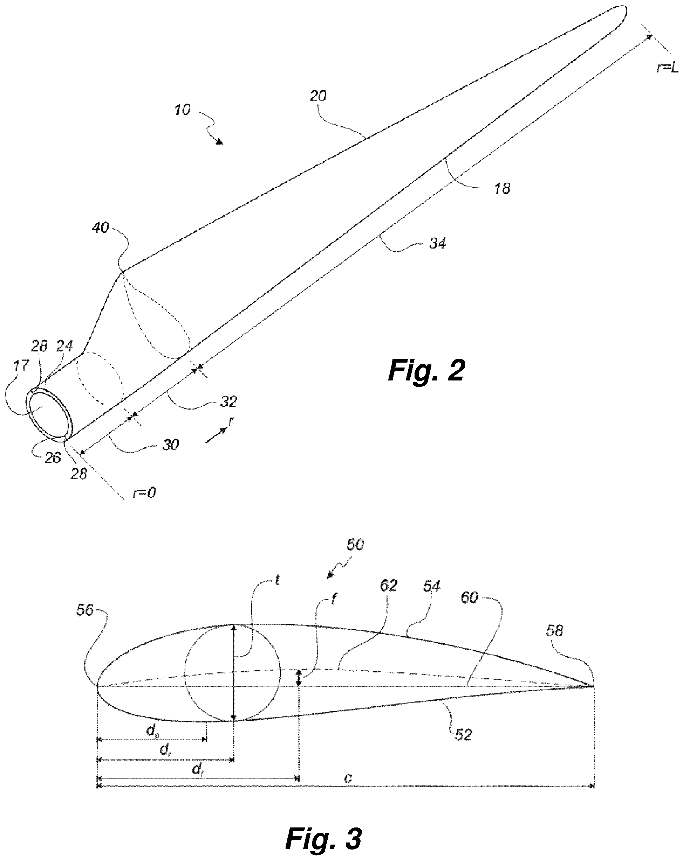

Fig. 2 shows a schematic view of a first embodiment of a wind turbine blade 10 according to the invention. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r* from the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

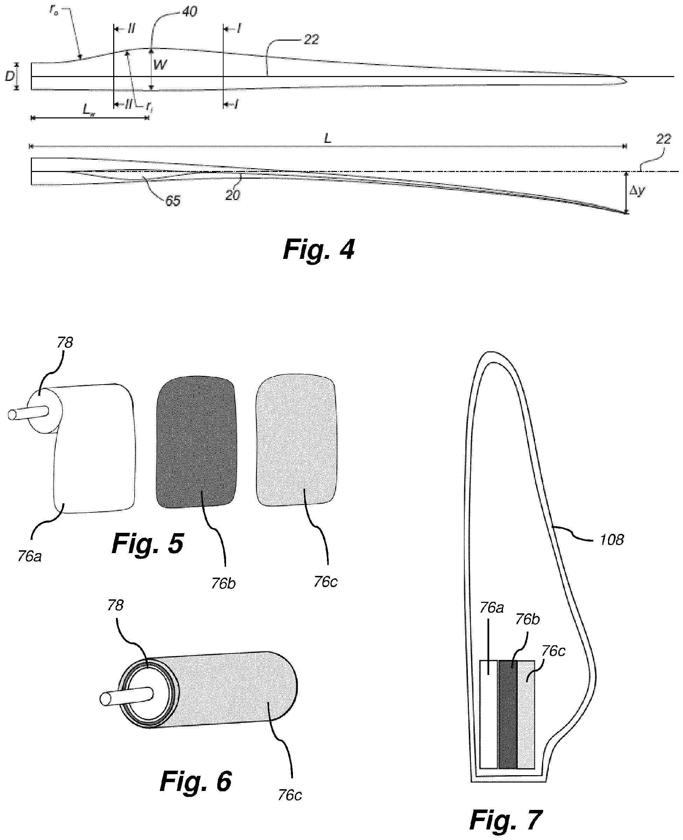

Figs. 3 and 4 depict parameters which are used to explain the geometry of the wind turbine blade according to the invention. Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade. The airfoil 50 has a thickness *t,* which is defined as the distance between the pressure side 52 and the suction side 54. The thickness *t* of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber *f*. The asymmetry can also be defined by use of parameters called the upper camber (or suction side camber) and lower camber (or pressure side camber), which are defined as the distances from the chord 60 and the suction side 54 and pressure side 52, respectively.

Airfoil profiles are often characterised by the following parameters: the chord length *c*, the maximum camber *f*, the position *d_{f}* of the maximum camber *f*, the maximum airfoil thickness *t*, which is the largest diameter of the inscribed circles along the median camber line 62, the position *dₜ* of the maximum thickness *t,* and a nose radius (not shown). These parameters are typically defined as ratios to the chord length *c*. Thus, a local relative blade thickness *t*/*c* is given as the ratio between the local maximum thickness *t* and the local chord length *c*. Further, the position *dₚ* of the maximum pressure side camber may be used as a design parameter, and of course also the position of the maximum suction side camber.

Fig. 4 shows other geometric parameters of the blade. The blade has a total blade length *L*. As shown in Fig. 3, the root end is located at position *r*= 0, and the tip end located at *r* = *L.* The shoulder 40 of the blade is located at a position *r = L_{w},* and has a shoulder width *W,* which equals the chord length at the shoulder 40. The diameter of the root is defined as *D*. The curvature of the trailing edge of the blade in the transition region may be defined by two parameters, viz. a minimum outer curvature radius *rₒ* and a minimum inner curvature radius *rᵢ*, which are defined as the minimum curvature radius of the trailing edge, seen from the outside (or behind the trailing edge), and the minimum curvature radius, seen from the inside (or in front of the trailing edge), respectively. Further, the blade is provided with a prebend, which is defined as *Δy,* which corresponds to the out of plane deflection from a pitch axis 22 of the blade.

Fig. 5 is a schematic view of a method of rolling a plurality of sheet parts 76a-c of onto a bobbin 78 in a predefined order. Fig. 6 illustrates the resulting arrangement of sheet parts on the bobbin 78. Thus, the sheet parts 76a-c can be successively unrolled from the bobbin 78 during layup in the blade mould 108, as illustrated in Fig. 7. In the illustrated embodiment, sheet part 76c would be unrolled and laid first, followed by sheet part 76b and sheet part 76a, i.e. in the reverse order as compared to said predefined order.

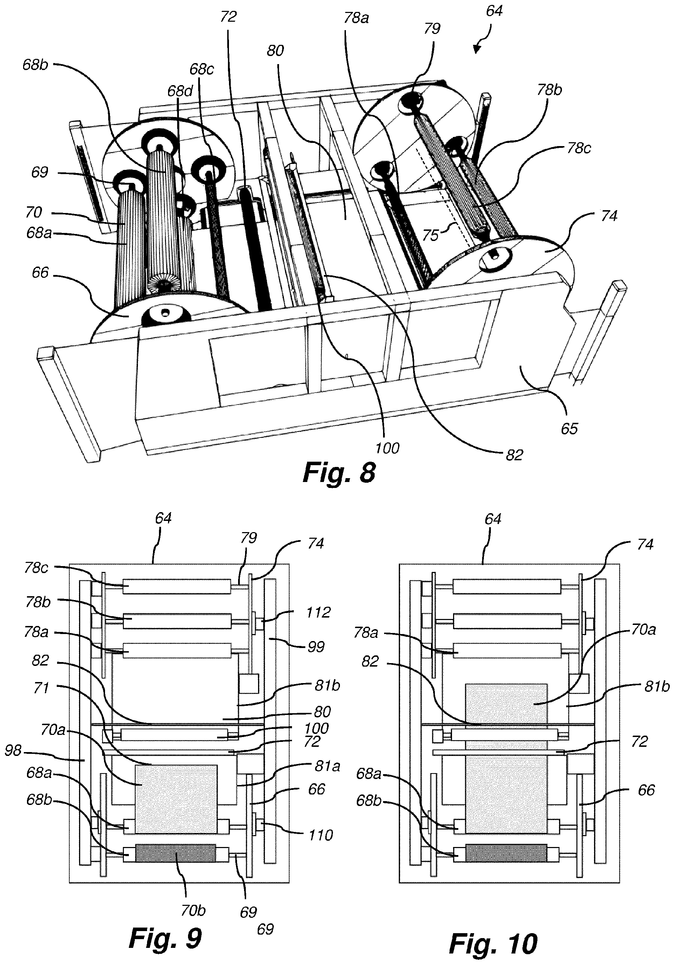

Fig. 8 is a perspective view of a sheet winding assembly 64 which can be used in this regard. In the illustrated embodiment, the sheet winding assembly 64 comprises a housing 65, wherein all components of the sheet winding assembly 64 are arranged in or on the housing 65 of the sheet winding assembly. The assembly 64 comprises a first magazine 66 holding a plurality of supply bobbins 68a-d, each supply bobbin carrying a respective sheet 70 of material wound around the bobbin 68a-d. Each supply bobbin 68a-d is rotatably arranged in the first magazine 66, on respective shafts 69, for unwinding its respective sheet of material.

A cutting device 72 is configured to cut the sheet of material unwound from one or more of the supply bobbins 68a-d to form cut sheet parts 76, which is shown in the sequence of Figs. 9-13 as further discussed below. The cutting device 72 is configured to cut the sheet of material along a direction substantially perpendicular to the transport direction of the sheet parts.

A second magazine 74 is provided for holding a plurality of receiving bobbins 78a-c, each receiving bobbin 78a-c being configured to receive one or more of the cut sheet parts 76. Each of the receiving bobbins78a-c is rotatably arranged in the second magazine 74 on respective shafts 79 for successively winding a plurality of the cut sheet parts around the respective receiving bobbin.

In the illustrated embodiment, each of the first and the second magazine 66, 74 is a revolving cylindrical magazine, which is revolving about a substantially horizontal axis, usually around respective shafts 112, 110, which are best seen in Fig. 9. The receiving bobbins 78a-c are arranged radially about the central longitudinal axis 75 of the second magazine. Likewise, the supply bobbins 68a-d are arranged radially about the central longitudinal axis of the first magazine.

A conveying assembly 80 is arranged in between the first magazine 66 and the second magazine 74, the conveying assembly 80 being configured for successively conveying the cut sheet parts 76 along a path extending from the first magazine 66 to the second magazine 74, as further explained below with regard to Figs. 9-13. In the illustrated embodiment, the conveying assembly 80 comprises a first conveyor belt 81a and a second conveyor belt 81b. It is also seen that the first magazine 66 is arranged at an upstream end of the sheet winding assembly 64, and the second magazine 74 is arranged at a downstream end of the sheet winding assembly 64.

An edge engagement device 82, which preferably comprises a clamping device adapted for clamping an edge of the sheet or of the cut sheet part, is arranged in between the first magazine 66 and the second magazine 74 configured to engage an edge 71 of the sheet or an edge 77 of the cut sheet part and to pull said edge towards the second magazine 74 such that an overlap 84 is provided between successive sheet parts. In some embodiments, the edge engagement device 82 comprises a gripping device adapted for gripping an edge of the sheet or of the cut sheet part.

In the illustrated embodiment, the sheet winding assembly 64 also comprises a paper bobbin 100 arranged in between the first magazine 66 and the second magazine 74, the paper bobbin comprising a rolled up paper material, such as kraft paper. A layer of paper can be unwound from the paper bobbin and can be placed among the parts of sheet on the receiving bobbin 78, either as intermediate layer(s), and/or as initial or final layer.

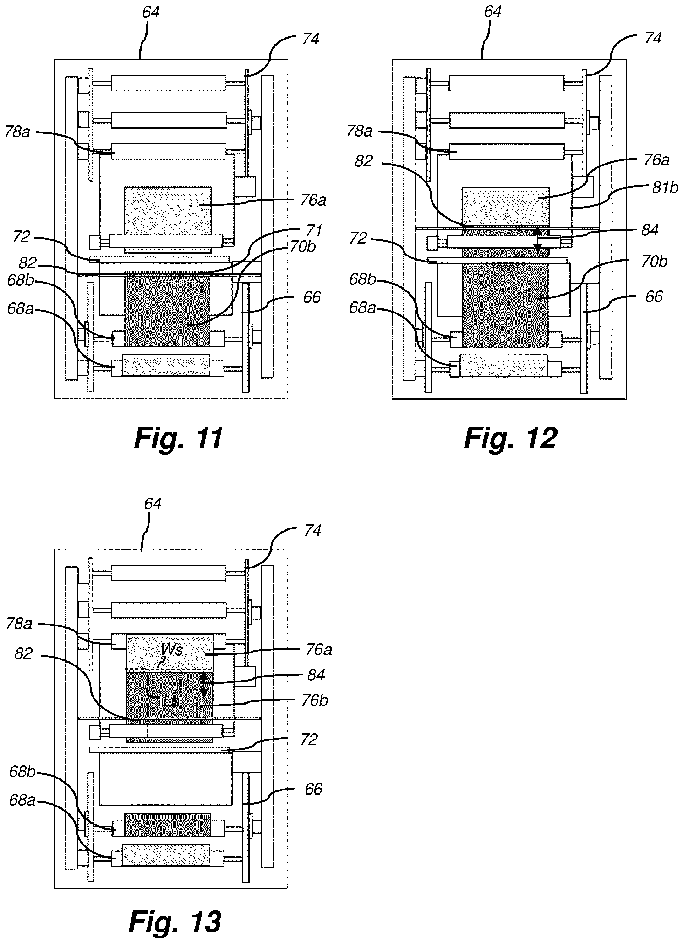

A method of successively winding a plurality of sheet parts around a receiving bobbin using the sheet winding assembly 64 is illustrated in the sequence of Figs. 9-13. As seen in Fig. 9 a sheet 70a of material is unwound from supply bobbin 68a of the first magazine 66. The sheet 70a is transferred in the downstream direction using the conveyor belts 81a, 81b. Once the sheet 70a has travelled along the path for a certain distance, as shown in Fig. 10, the sheet 70a is cut using the cutting device 72 to form a cut sheet part 76a, see Fig. 11. In the illustrated example, the remainder of the sheet is then retracted and re-wound onto the supply bobbin 68a, followed by a rotation of the first magazine 66 for withdrawing a second sheet 70b of material from supply bobbin 68b. Accordingly, Fig. 11 shows the bobbin 68b in the position closest to the conveying assembly, wherein a second sheet 70b has been partly unwound and transported along the path using the conveying assembly.

The edge engagement device 82 is adapted to move between a first location upstream of the cutting device 72 to a second location downstream of the cutting device 72. Thus, as seen in Fig. 11, the edge engagement device 82 has travelled upstream relative to its position in Fig. 10. In the illustrated embodiment, the edge engagement device 82 is slidingly received in between two opposing rails 98, 99 extending parallel to each other.

The edge engagement device 82 engages the edge 71 of sheet 70b and pulls it towards the second magazine 74 such that an overlap 84 is provided between successive sheet parts, as seen in Fig. 12. In the area of overlap sheet 70b is placed on top of sheet part 76a. The overlap 84 can be between 200 to 2000 mm, preferably between 500 and 1000 mm, as measured in a direction perpendicular to the edge of the sheet parts, i.e. corresponding to the direction indicated by the double arrow 84 in Figs. 12 and 13. Also, the length *Ls* and the width *Ws* of the sheet part 76b are indicated in Fig. 13.

As seen in the sequence of Figs. 10-12, the edge engagement device 82 is configured to move in an upstream direction (from the position of Fig. 10 to the position of Fig. 11) and in a downstream direction (from the position of Fig. 11 to the position of Fig. 12) independently from any movement of the conveying assembly 80. Thus, for example, while the conveyor belt(s) stand still or run at low speed, the edge engagement device can move either upstream or downstream at its own speed.

Then, the cut sheet part 76a and the sheet 70b are together transported downstream using the conveying assembly, followed by cutting the sheet 70b using the cutter 72. The cut sheet parts 76a, 76b are then transported towards the second magazine 74 using the conveying assembly 80, followed by winding the cut sheet part around the receiving bobbins 78a of the second magazine 74, see Fig. 13.

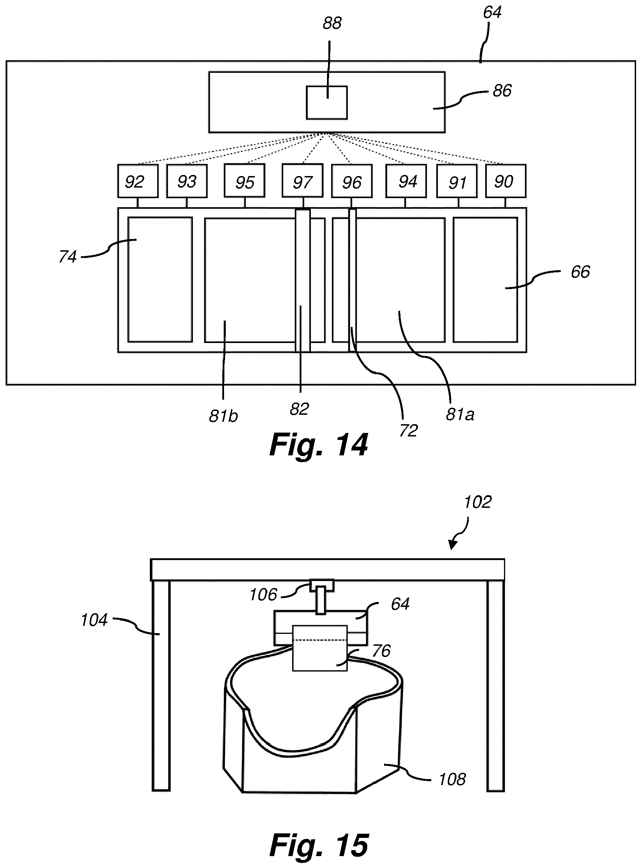

As seen in the schematic drawing of Fig. 14, the sheet winding assembly 64 comprises a driving system comprising a plurality drive units 90-96, preferably comprising one or more actuators, such as one or more motors, each optionally coupled with a transmission mechanism, such as a gearbox. Drive unit 90 is for rotating the first magazine 66 around its horizontal axis. Drive unit 91 is for rotating the bobbins of the first magazine around their respective horizontal axes or shafts. Each bobbin may have its individual drive unit 91. Drive unit 92 is for rotating the second magazine 74 around its horizontal axis. Drive unit 93 is for rotating the bobbins of second magazine 74 around their respective horizontal axes or shafts. Each bobbin may have its individual drive unit 93.

Also, each of the conveyor belts 81a, 81b is driven by a respective drive unit 94, 95, which may include a drive motor. Drive units 94, 95 are adapted to drive the respective conveyor belt in a conveying direction, wherein the drive means preferably comprise one or more drive pulleys or drive wheels. Similarly, drive unit 96 is used for actuating the cutter 72, and drive unit 97 is used for moving the edge engagement device 82.

The sheet winding assembly 64 also comprises a control unit 86 configured to independently adapt the speed of the rotational movement of each of the magazines 66, 74, the supply bobbins 68 and the receiving bobbins 78. The control unit 86 is also configured to independently control the movement of the edge engagement device 82, the cutting action of the cutter 72, and the movement of the conveyor belts 81a, 81b. The sheet winding assembly 64 also comprises programmable logic 88 for determining and monitoring a sequence of winding of sheet parts onto the receiving bobbins 78.

Fig. 15 is a schematic drawing of a moulding assembly 102 of the present invention which can be used to mould a wind turbine blade or a shell half thereof. The moulding assembly comprises a mould 108 for forming a shell half of a wind turbine blade, a gantry 104, and a rail 106 suspended from the gantry 106, such as a monorail. The moulding assembly also comprises a sheet winding assembly 64 according to the present invention, wherein the sheet winding assembly 64 is movably arranged in or on the rail 106. Thus, the receiving bobbins 78, which were previously loaded with the various sheet parts, can be successfully unwound to release the sheet parts, which can be placed within the blade mould 108 to form the shell half.

The invention is not limited to the embodiments described herein, and may be modified or adapted without departing from the scope of the present invention.

### List of reference numerals

- 2: wind turbine
- 4: tower
- 6: nacelle
- 8: hub
- 10: blade
- 14: blade tip
- 16: blade root
- 18: leading edge
- 20: trailing edge
- 22: pitch axis
- 24: first shell half
- 26: second shell half
- 30: root region
- 32: transition region
- 34: airfoil region
- 40: shoulder / position of maximum chord
- 50: airfoil profile
- 52: pressure side
- 54: suction side
- 56: leading edge
- 58: trailing edge
- 60: chord
- 62: camber line / median line
- 64: sheet winding assembly
- 65: housing
- 66: first magazine
- 68: supply bobbins
- 69: shafts of supply bobbins
- 70: sheets of material
- 71: edge of sheet
- 72: cutting device
- 74: second magazine
- 75: central axis of second magazine
- 76: cut sheet parts
- 77: edge of cut sheet part
- 78: receiving bobbins
- 79: shafts of receiving bobbins
- 80: conveying assembly
- 81: conveyor belt
- 82: edge engagement device
- 84: overlap
- 86: control unit
- 88: programmable logic
- 90: drive unit for rotating first magazine
- 91: drive unit for rotating bobbins of first magazine
- 92: drive unit for rotating second magazine
- 93: drive unit for rotating bobbins of second magazine
- 94: drive unit for first conveyor belt
- 95: drive unit for second conveyor belt
- 96: drive unit for cutter
- 97: drive unit for edge engagement device
- 98: first rail
- 99: second rail
- 100: paper bobbin
- 102: moulding assembly
- 104: gantry
- 106: rail suspended from gantry
- 108: blade mould
- 110: shaft of first magazine
- 112: shaft of second magazine
- c: chord length
- *dₜ*: position of maximum thickness
- *d_{f}*: position of maximum camber
- *dₚ*: position of maximum pressure side camber
- *f*: camber
- *L*: blade length or longitudinal direction of blade
- *Ls*: length of sheet part
- *W*: width or chordwise direction of blade
- *Ws*: width of sheet part
- *r*: local radius, radial distance from blade root
- *t*: thickness
- Δ*y*: prebend

## Claims

1. A sheet winding assembly (64) comprising
a first magazine (66) holding a plurality of supply bobbins (68), each supply bobbin carrying a respective sheet (70) of material wound around the bobbin, wherein each supply bobbin is rotatably arranged in the first magazine (66) for unwinding its respective sheet of material,
a cutting device (72) configured to cut the sheet of material unwound from one or more of the supply bobbins (68) to form cut sheet parts (76),
a second magazine (74) holding one or more receiving bobbins (78), each receiving bobbin being configured to receive one or more of the cut sheet parts, wherein each receiving bobbin is rotatably arranged in the second magazine (74) for successively winding a plurality of the cut sheet parts around the respective receiving bobbin,
a conveying assembly (80) arranged in between the first magazine (66) and the second magazine (74), the conveying assembly (80) being configured for successively conveying the cut sheet parts along a path extending from the first magazine (66) to the second magazine (74), and
an edge engagement device (82) arranged in between the first magazine (66) and the second magazine (74) configured to engage an edge (71) of the sheet or of the cut sheet part and to pull said edge towards the second magazine (74) such that an overlap (84) is provided between successive sheet parts.

2. A sheet winding assembly according to claim 1, wherein the edge engagement device is adapted to move between a first location upstream of the cutting device (72) to a second location downstream of the cutting device (72).

3. A sheet winding assembly according to claims 1 or 2, wherein the edge engagement device is configured to move in an upstream direction and in a downstream direction independently from movement of the conveying assembly.

4. A sheet winding assembly according to any of the preceding claims, wherein the sheet winding assembly (64) comprises two opposing rails (98, 99) extending parallel to each other, and wherein the edge engagement device (82) is slidingly received in between the two opposing rails.

5. A sheet winding assembly according to any of the preceding claims, wherein the edge engagement device (82) comprises a clamping device adapted for clamping an edge of the sheet or of the cut sheet part.

6. A sheet winding assembly according to any of claims 1-4, wherein the edge engagement device (82) comprises a gripping device adapted for gripping an edge of the sheet or of the cut sheet part.

7. A sheet winding assembly according to any of the preceding claims, wherein the first and/or the second magazine (74) is a revolving magazine, preferably revolving about a substantially horizontal axis.

8. A sheet winding assembly according to any of the preceding claims, wherein the conveying assembly (80) comprises at least one conveyor belt (81), preferably a first conveyor belt and a second conveyor belt.

9. A sheet winding assembly according to any of the preceding claims, wherein each of the plurality of supply bobbins (68) is supported on a respective shaft (69) rotatably mounted within the first magazine, and wherein each of the receiving bobbins (78) is supported on a respective shaft (79) rotatably mounted within the second magazine (74).

10. A sheet winding assembly according to any of the preceding claims, wherein the sheet winding assembly (64) comprises a driving system comprising one or more drive units preferably comprising one or more actuators, such as one or more motors, each optionally coupled with a transmission mechanism, such as a gearbox, and respective shafts for supporting each of the supply bobbins (68) and receiving bobbins (78) in their respective magazine, for imparting a rotational movement to each of the supply bobbins (68) and receiving bobbins (78).

11. A sheet winding assembly according to any of the preceding claims, wherein the sheet winding assembly (64) comprises programmable logic (88) for determining and monitoring a sequence of winding of sheet parts onto the receiving bobbins (78).

12. A sheet winding assembly according to any of the preceding claims, wherein the cutting device (72) is configured to cut the sheet of material along a direction substantially perpendicular to the transport path of the sheet parts.

13. A moulding assembly (102) comprising
a mould (108) for forming a shell of a wind turbine blade,
a gantry (104) or a crane,
a rail (106) suspended from the gantry or crane above the mould, and
a sheet winding assembly (64) according to any of claims 1-12, wherein the sheet winding assembly (64) is movably arranged in or on the rail.

14. A method of successively winding a plurality of sheet parts around a receiving bobbin using the sheet winding assembly (64) of any of claims 1-12, the method comprising the repeated steps of
unwinding a sheet of material from one of the plurality of supply bobbins (68) of the first magazine,
cutting the sheet of material with the cutting device (72) to form a cut sheet part,
transporting the cut sheet part towards the second magazine (74) using the conveying assembly (80),
winding the cut sheet part around one of the receiving bobbins (78) of the second magazine (74),
wherein the method further comprises engaging an edge of one or more of the sheets or of the cut sheet parts using the edge engagement device (82) and pulling the sheet or sheet part towards the second magazine (74) such that an overlap (84) is provided between successive sheet parts.

15. A method according to claim 14, wherein the overlap is between 200 to 2000 mm, preferably between 500 and 1000 mm, as measured in a direction perpendicular to the edge of the sheet parts.
